# FASCICULE DE BREVET EUROPEEN

(11) **EP 1 397 248 B1**
(45) Date de publication et mention de la délivrance du brevet: **20.06.2007**
(21) Numéro de dépôt: 02735308.5
(22) Date de dépôt: 25.04.2002
(51) Int. Cl.: B32B 27/08, F16L 11/08, B32B 27/06

(54) **TUBE PROTEGE EN MATIERE PLASTIQUE ET PROCEDE DE FABRICATION DUDIT TUBE**
GESCHÜTZTES KUNSTSTOFFROHR UND VERFAHREN ZU SEINER HERSTELLUNG
PROTECTED PLASTIC TUBE AND METHOD FOR MAKING SAME

(30) Priorité: 27.04.2001 BE 200100292
(43) Date de publication de la demande: 17.03.2004
(73) Titulaire: egeplast Werner Strumann GmbH & Co. KG, 48268 Greven (DE)
(72) Inventeur: DEHENNAU, Claude, B-1410 Waterloo (BE); MATZ, Pierre, B-1457 Nil Saint-Vincent (BE)
(74) Mandataire: Fritz, Edmund Lothar
(86) Numéro de dépôt international: PCT/EP2002/004669
(87) Numéro de publication internationale: WO 2002/087874

(56) Documents cités:
- WO-A-92/01885
- WO-A-97/40984
- US-A- 5 474 822
- US-A- 5 520 223

## Description

La présente invention concerne un procédé de production d'un tube multicouche en matière plastique protégé de la détérioration de ses propriétés lors de son usage et de sa manipulation.

Les tubes devant résister à des sollicitations mécaniques importantes telles que les tubes de grand diamètre et/ou les tubes soumis à haute pression interne peuvent être produits de manière économique en fonte ductile. Les tubes en matière plastique sont cependant préférés dans nombre de cas à la fonte en raison de leur beaucoup plus grande légèreté et de leur remarquable résistance à la corrosion.

Pour résister aussi bien que la fonte aux fortes sollicitations mécaniques, les tubes en matières plastiques traditionnelles doivent comporter une épaisseur de paroi plus élevée, ce qui en grève le coût et les rend moins compétitifs par rapport aux tubes en fonte ductile.

Le brevet US 5,474,822 décrit un tube multicouche dans lequel une couche interne en matière plastique non orientée est protégée par deux couches de matière plastique non orientée également, ladite structure multicouche étant obtenue par coextrusion.

Par ailleurs, les tubes en matière plastique présentent souvent une faible résistance au fluage sous contrainte prolongée. Il est cependant très important, dans le cas de certains types d'utilisation, que la résistance de ces tubes, par exemple la résistance à l'éclatement, ne se dégrade pas au bout d'une longue période d'utilisation qui peut s'étendre sur parfois plusieurs dizaines d'années.

Pour résoudre ce problème, plusieurs solutions ont été envisagées. Une première solution a consisté en la production de tubes dont la matière plastique est biorientée dans les directions parallèle et perpendiculaire à l'axe du tube. L'opération de biorientation ne peut cependant être effectuée que sur le tube préalablement formé par extrusion, ce qui rend le procédé discontinu et en grève le coût. Par ailleurs, le maintien de la biorientation de la matière lors de la pose de raccords nécessite l'observance de précautions particulières impliquant l'utilisation de nombreux raccords spéciaux. En outre, le renforcement obtenu selon cette technique est surtout efficace dans le sens longitudinal et ne résout que très partiellement le problème de la résistance aux efforts radiaux qui représentent les contraintes maximales dans certaines applications, par exemple le transport de fluides sous pression. Jusqu'à présent, les tentatives effectuées pour rendre le procédé de biorientation continu n'ont pas encore porté pleinement leurs fruits, en raison des contraintes technologiques et du surcoût important qu'elles induisent, en regard du gain de résistance encore insuffisant que l'on obtient.

Une autre solution a été de placer des renforts sur les tubes en matière plastique, comme par exemple l'enroulement, en continu, de fibres (en verre, par exemple) imprégnées par une résine thermoplastique ou thermodurcissable ("COFITS"). Toutefois, cette solution n'est pas non plus sans défauts, car ces enroulements sont généralement fragiles et augmentent fortement la densité du tube renforcé résultant, ainsi que son coût. Par ailleurs, l'efficacité de ces renforcements ne demeure pas toujours stable au cours du temps et le recyclage du tube en fin de vie est souvent difficile en raison de l'imbrication dans le polymère du tube de matières étrangères délicates à séparer.

On connaît le brevet US-A-4,093,004 qui divulgue le principe du renforcement de mandrins en diverses matières (carton, papier, caoutchouc, bois ou matière plastique) au moyen de bandes en polyoléfine orientée. Le tube renforcé obtenu ne présente cependant pas une résistance suffisante en environnements comprenant des solvants organiques, tels que ceux que l'on trouve par exemple dans les compositions adhésives utilisées pour solidariser le tube aux raccords. De plus, le séjour du tube à haute température est nuisible à la conservation de l'orientation des bandes de renforcement et, par voie de conséquence, à la persistance de la bonne résistance mécanique du tube.

En matière de tubes ayant au moins une couche de protection/renfort en matière plastique orientée, on connaît aussi les documents WO 92/01885 et US 5,520,223. Le document WO 92/01885 décrit le fait de renforcer des tubes à l'aide d'enroulements de bandes orientées, et de protéger ces enroulements au moyen d'une gaine directement coextrudée sur ces enroulements. Le document US 5,520,223 décrit un tube métallique ayant un revêtement interne à base de polymère orienté.

L'invention a pour objet de résoudre les problèmes posés par les systèmes de renforcement connus évoqués ci-dessus, tout en maintenant le coût de production dans des limites acceptables et concurrentielles avec les tubes en fonte ductile.
A. cet effet l'invention concerne un procède pour la production d'un tube multicouche en matière plastique, protégé de la détérioration de ses propriétés lors de son usage et de sa manipulation, caractérisé en ce que :
   a) on applique une première couche de protection sur un mandrin tubulaire à base d'une composition polymérique par enroulement d'au moins une épaisseur de bandes de composition polymérique non orientée compatible avec la composition polymérique de la matière plastique sous-jacente ;
   b) on applique ensuite par surextrusion une deuxième couche de protection comprenant une composition polymérique non orientée, formant couche de finition externe,
   ledit mandrin :
   - soit comprenant une composition polymérique de structure biorentée
   - soit comprenant une composition polymérique de structure non orientée munie en surface d'une couche de renforcement constituée d'au moins deux épaisseurs de bandes de renforcement comprenant une composition polymérique orientée.

L'invention concerne un procédé pour la production d'un tube multicouche, c'est-à-dire un tube formé d'un mandrin tubulaire recouvert d'au moins les couches de protection dont la couche la plus extérieure forme une couche superficielle continue.

Le mandrin tubulaire est un objet creux en forme de tube. Il est constitué, au moins partiellement, d'une composition polymérique.

Par composition polymérique; on entend désigner toute matière comprenant au moins une matière plastique à base de polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres de verre, les fibres minérales naturelles ou les fibres polymériques. Il est également possible d'utiliser des structures multicouches constituées de couches empilées et solidaires comprenant au moins un des polymères ou copolymères décrits *supra.*

Des polymères souvent employés sont le polychlorure de vinyle et le polyéthylène haute densité. D'excellents résultats ont été obtenus avec du polychlorure de vinyle.

Par tube "protégé de la détérioration" on entend désigner un tube dont la capacité de résistance aux conditions de son environnement est augmentée par enveloppement du tube au moyen d'au moins une couche en matière spécialement adaptée pour résister dans ces conditions.

Comme exemple de conditions d'environnement qui peuvent être néfastes au maintien des propriétés des tubes non protégés, on peut citer, la haute température et la présence de solvants organiques.

Les couches de protection sont précisément les couches spéciales citées *supra* qui augmentent la capacité de résistance du tube aux conditions de son environnement.

Ces couches de protection comprennent chacune une composition polymérique de structure non orientée, c'est-à-dire une composition ne comprenant, à titre de polymère que ceux dont les chaînes de molécules ne présentent aucune orientation particulière.

Selon l'invention, la première couche de protection est compatible avec la composition polymérique de la matière plastique sous-jacente. Par le terme "compatible", on entend désigner une couche de protection dont la composition polymérique qui la compose est inerte du point de vue chimique vis-à-vis de la matière plastique sous-jacente et dont la composition physique est telle qu'à l'état fondu elle peut se mélanger facilement à cette matière plastique sous-jacente sans donner lieu à des phénomènes de ségrégation. La compatibilité peut aussi impliquer une adhésion aisée d'une couche à l'autre.

Des exemples de compositions polymériques qui conviennent pour la première couche de protection sont celles comprenant les polyhalogénures de vinyle et les polyoléfines. Le polychlorure de vinyle a donné d'excellents résultats.

La deuxième couche de protection est une couche de finition, c'est-à-dire une couche extérieure qui fixe les dimensions externes du tube ainsi que la nature et l'état de sa surface. La deuxième couche de protection peut avoir une composition identique ou différente de celle de la première couche. En particulier, elle peut être constituée du même matériau polymérique que celui de la première couche. Le polychlorure de vinyle a également donné de bons résultats dans la composition de cette deuxième couche de protection.

Selon une première réalisation particulière du tube conforme à l'invention, le mandrin comprend une composition polymérique de structure biorientée.

Par structure biorientée, on entend désigner une structure polymérique dont au moins 20 % en poids des chaînes moléculaires des polymères qui interviennent dans sa composition sont disposées selon deux directions distinctes. De préférence, les deux directions sont perpendiculaires. On peut choisir pour polymères dont les chaînes sont orientées tout type de polymère thermoplastique qui se prête facilement à l'orientation de ses chaînes de molécules. Des exemples de tels polymères sont les polyoléfines, les polyhalogénures de vinyle, les polyamides ainsi que leurs copolymères.

Lorsque le mandrin ne comprend pas de composition polymérique orientée, une deuxième variante intéressante du tube selon l'invention est celle où une couche de renforcement qui est constituée d'au moins deux épaisseurs de bandes de renforcement comprenant une composition polymérique orientée est située entre le mandrin et la première couche de protection. Selon cette deuxième variante de l'invention, c'est le caractère orienté de la composition polymérique des bandes de renforcement qui confère au tube un renforcement efficace.

Par tube renforcé, on entend désigner un tube dont les propriétés mécaniques intrinsèques de la composition de matière de base qui le constitue sont modifiées par la présence d'une composition de matière additionnelle différente de cette matière de base et qui apporte par sa présence un supplément de résistance mécanique. La composition de matière de base est une composition polymérique qui représente au moins 40 % en poids du poids total du tube renforcé. La composition polymérique de base est celle qui se retrouve dans le mandrin. La composition de matière additionnelle est matérialisée par la composition de la couche de renforcement.

Le vocable "composition polymérique orientée" signifie dans ce cas que la composition polymérique comprend au moins un polymère orienté.

La couche de renforcement peut comprendre une seule composition polymérique orientée. Alternativement, elle peut aussi comprendre un mélange de plusieurs compositions polymériques et éventuellement d'additifs non polymériques dont au moins un des polymères est orienté. Le polymère peut être tout polymère thermoplastique susceptible de pouvoir être présent dans les bandes sous forme orientée, c'est-à-dire ayant au moins 20 % en poids des chaînes moléculaires qui le composent disposées selon une même direction. De préférence, la direction de l'orientation est celle de la longueur de la bande. On peut choisir pour polymère orienté tout type de polymère thermoplastique qui se prête bien à l'orientation de ses chaînes de molécules. Généralement, on utilise un polymère orienté dont la nature est la même que celle des polymères servant couramment à la production de tubes devant résister à la pression. Des exemples intéressants de tels polymères dans le cas d'un mandrin en polyéthylène haute densité (HDPE) sont, non limitativement, les résines HDPE multimodales et les résines réticulables.

Les deux épaisseurs de bandes de renforcement sont enroulées autour du mandrin de telle manière que la deuxième épaisseur recouvre totalement la première autour du mandrin.

Lorsque le tube est renforcé par des bandes orientées, une alternative avantageuse à la deuxième variante décrite ci-dessus consiste en ce que la première épaisseur de bandes de la couche de renforcement est collée sur le mandrin, c'est-à-dire solidarisée à celui-ci par l'intermédiaire d'un adhésif de nature usuelle adaptée.

Il est aussi particulièrement intéressant que les différentes épaisseurs de la couche de renforcement soient en outre collées les unes sur les autres, afin d'assurer à l'ensemble du tube une cohésion maximale.

Dans tous les cas de figure exposés *supra,* le tube comporte une première couche de protection formée d'au moins une épaisseur de bandes non orientées enroulées autour du tube.

Dans toutes les variantes de tube décrites ci-avant, une forme de réalisation intéressante est celle dans laquelle la première couche de protection est collée sur la composition polymérique sous-jacente.

L'application de la deuxième couche de protection par surextrusion peut se faire selon toute technique de surextrusion bien connue en soi, en particulier selon les techniques de surextrusion utilisées dans l'industrie de la fabrication des tubes en matière plastique. Un exemple de ces techniques est l'utilisation d'une filière creuse en forme de bague au centre de laquelle on fait passer le tube et qui permet la déposition régulière et continue d'une quantité contrôlée de composition polymérique en périphérie du tube.

Une variante intéressante au procédé conforme à l'invention qui permet l'obtention d'un tube protégé et renforcé vis-à-vis des sollicitations mécaniques consiste à effectuer les opérations suivantes :
a) on applique d'abord sur un mandrin comprenant une composition polymérique de structure non orientée une couche de renforcement constituée d'au moins deux épaisseurs de bandes comprenant une composition polymérique orientée, par enroulement des bandes de manière telle que les bandes d'une épaisseur particulière forment avec celles de l'épaisseur adjacente un angle semblable et de signe opposé par rapport à la direction du tube;
b) on applique ensuite la première couche de protection ;
c) on applique en dernier lieu la couche de finition externe.

Dans cette définition, le vocable "angle semblable" signifie un angle au moins égal au même angle moins 5 degrés d'angle. Le vocable "angle semblable" comprend aussi un angle au plus égal au même angle plus 5 degrés d'angle. De préférence, ce vocable signifie un angle au moins égal au même angle moins 2 degrés d'angle. De préférence aussi, il comprend un angle au plus égal au même angle plus 2 degrés d'angle.

L'application des deux couches de protection se fait de la même manière que celle explicitée plus haut pour la fabrication du tube non renforcé.

Dans la variante du procédé de fabrication d'un tube protégé et renforcé, il est en outre particulièrement intéressant de préencoller les bandes de renforcement. Dans ce cas, on peut avantageusement utiliser un adhésif polymère activable thermiquement après sa mise en place, en effectuant les opérations suivantes, dans l'ordre :
a) on préencolle les bandes de la couche de renforcement au moyen de l'adhésif polymère activable thermiquement ;
b) on applique ces bandes de renforcement par enroulement autour du mandrin;
c) on applique la première couche de protection ;
d) on active l'adhésif de la couche de renforcement par irradiation du tube en cours de formation au moyen d'un rayonnement infrarouge ;
e) on applique la couche de finition externe.

L'opération de préencollage peut s'effectuer immédiatement avant l'application des bandes de renforcement, ou encore en temps différé, à un autre moment avant la fabrication du tube. De même, elle peut être appliquée sur une face des bandes, ou sur les deux. De préférence, elle est appliquée sur une des faces.

Cette technique permet avantageusement d'appliquer les bandes de renforcement sans les chauffer au préalable et de doser ensuite facilement le flux de chaleur irradié par le rayonnement infrarouge au travers de la première couche de protection afin qu'il ne détruise pas l'orientation de la composition polymérique des bandes de renforcement.

En variante, on peut également activer l'adhésif des bandes de renforcement en plusieurs étapes distinctes, après chaque application d'une épaisseur de bandes par irradiations successives du tube en cours de formation au moyen du rayonnement infrarouge.

Il est aussi possible d'activer cet adhésif en plusieurs étapes distinctes après application d'un groupe de plusieurs épaisseurs successives des bandes de renforcement.

Au moins une des couches de protection peut aussi, en variante, être collée à la structure sous-jacente au moyen d'un adhésif. Cet adhésif peut, par exemple, être activable par irradiation infrarouge.

L'exemple qui suit est donné en vue d'illustrer l'invention, sans vouloir en limiter en aucune manière sa portée.

On a préparé une bande de polychlorure de vinyle (PVC) orienté de 360 mm de largeur par étirage d'un film de 400 mm de PVC non orienté SOLVIN^{®} 266RC selon un taux de 400 % au moyen d'une calandre de laboratoire. Cette bande a présenté après étirage une épaisseur de 400 µm, un module élastique de 5 GPa et une contrainte de rupture de 175 MPa.

On a ensuite encollé cette bande sur une seule de ses faces à l'aide d'un adhésif polymère hydrosoluble activable par la chaleur, de marque LUPHEN^{®} D200A.

La bande encollée a été enroulée autour d'un tube POLVA® en PVC de 50 mm de diamètre extérieur et de rapport diamètre extérieur / épaisseur de paroi de 34, de qualité ordinaire du point de vue de sa résistance à la pression (pression admissible nominale de 0,75 Mpa). L'enroulement a été effectué en deux couches croisées selon un angle de 55° par rapport à l'axe du tube. On a ensuite chauffé la surface extérieure des bandes enroulées sur le tube à 75°C pendant 5 secondes.

Le tube obtenu a ensuite été recouvert d'une nouvelle couche de PVC SOLVIN^{®} 266RC préalablement additivé sous la forme d'une bande non orientée de 400 µm d'épaisseur le couvrant totalement et préalablement enduite de l'adhésif LUPHEN^{®} D200A. Les additifs comprenaient un mélange de stabilisant à l'étain de type carboxylate (3 % en poids par rapport au PVC), d'un produit facilitant la mise en oeuvre (1 % en poids de polyméthacrylate de méthyle) et d'un lubrifiant (1 % en poids) composé d'un mélange de stéarate de Ca, de paraffine et de cire de polyéthylène oxydé. L'adhésif a alors été activé dans les mêmes conditions que celles décrites plus haut pour les bandes orientées.

Le tube obtenu a ensuite été recouvert d'une couche de finition en PVC SOLVIN^{®} 266RC (qualité habituellement employée pour des tubes de 300 µm d'épaisseur), auquel on a ajouté les mêmes additifs que ceux décrits plus haut, par passage au travers d'une filière annulaire, ensuite dans un dispositif de calibrage et dans un récipient de refroidissement rempli d'eau à température ordinaire.

Les mesures de pression d'éclatement selon la norme ISO 9080 effectuées sur un tube de référence en PVC POLVA®, non protégé ni renforcé et par conséquent non conforme à l'invention ainsi que sur des tubes renforcés et protégés selon l'invention ont donné les résultats suivants :

| Type de tube | Epaisseur, mm | Pression d'éclatement, 0.1 MPa (bars) |
|---|---|---|
| POLVA^{®} | 3,7 | 85 |
| POLVA^{®} protégé et renforcé | 3,2 | 100 |
| POLVA® protégé et renforcé | 3,8 | 120 |

Il apparaît que les tubes selon l'invention présentent une résistance à l'éclatement nettement améliorée par rapport à un tube non renforcé. Il est même possible d'économiser environ 25 % en poids de matière par rapport à un tube classique, tout en gagnant néanmoins 15 % de résistance à l'éclatement (tube POLVA® renforcé et protégé de 3,2 mm d'épaisseur).

## Revendications

1. - Procédé pour la production d'un tube multicouche en matière plastique, protégé de la détérioration de ses propriétés lors de son usage et de sa manipulation, **caractérisé en ce que** :
a) on applique une première couche de protection sur un mandrin tubulaire à base d'une composition polymérique par enroulement d'au moins une épaisseur de bandes de composition polymérique non orientée compatible avec la composition polymérique de la matière plastique sous-jacente ;
b) on applique ensuite par surextrusion une deuxième couche de protection comprenant une composition polymérique non orientée, formant couche de finition externe,
ledit mandrin:
- soit comprenant une composition polymérique de structure biorientée
- soit comprenant une composition polymérique de structure non orientée munie en surface d'une couche de renforcement constituée d'au moins deux épaisseurs de bandes de renforcement comprenant une composition polymérique orientée.

2. - Procédé selon la revendication précédente pour la production d'un tube renforcé vis-à-vis des sollicitations mécaniques, **caractérisé en ce que** :
a) on applique d'abord sur un mandrin à base d'une composition polymérique non orientée une couche de renforcement constituée d'au moins deux. épaisseurs de bandes comprenant une composition polymérique orientée, par enroulement des bandes de manière telle que les bandes d'une épaisseur particulière forment avec celles de l'épaisseur adjacente un angle semblable et de signe opposé par rapport à la direction du tube ;
b) on applique ensuite la première couche de protection ;
c) on applique en dernier lieu la couche de finition externe.

3. - Procédé selon la revendication précédente, **caractérisé en ce que** la première épaisseur de la couche de renforcement est collée sur le mandrin.

4. - Procédé selon la revendication précédente, **caractérisé en ce qu'**on effectue dans l'ordre les opérations suivantes :
a) on préencolle les bandes de la couche de renforcement sur une de leurs faces au moyen d'un adhésif polymère activable thermiquement ;
b) on applique ces bandes de renforcement par enroulement autour du mandrin ;
c) on applique la première couche de protection ;
d) on active l'adhésif de la couche de renforcement par irradiation du tube en cours de formation au moyen d'un rayonnement infrarouge;
e) on applique la couche de finition externe.

5. Procédé selon la revendication 3; **caractérisé en ce qu'**on effectue dans l'ordre les opérations suivantes :
a) on préencolle les bandes de la couche de renforcement au moyen d'un adhésif polymère activable thermiquement;
b) on applique ces bandes de renforcement par enroulement autour du mandrin de chacune des épaisseurs de bandes successives tandis qu'on active dans le même temps l'adhésif préencollé en plusieurs étapes distinctes, après chaque application d'une épaisseur de bandes ou d'un groupe de plusieurs épaisseurs successives de ces bandes, par irradiations successives du tube en cours de formation au moyen d'un rayonnement infrarouge ;
c) on applique la première couche de protection ;
d) on applique la couche de finition externe.

6. - Procédé selon une quelconque des revendications précédentes, **caractérisé en ce que** la première couche de protection est collée sur la composition polymérique sous jacente.

## Claims

1. Process for producing a multilayer plastic pipe protected from deterioration of its properties when being used and when being handled, **characterized in that**:
a) a first protective layer is applied to a tubular support based on a polymeric composition by winding at least one thickness of tapes of unoriented polymeric composition compatible with the polymeric composition of the subjacent plastic; and
b) a second protective layer comprising an unoriented polymeric composition is then applied by overextrusion, forming the external finishing coat,
wherein said support:
- either comprises a polymeric composition of biaxially oriented structure.
- or comprises a polymeric composition of unoriented structure and bearing on its surface a reinforcing layer formed from at least two thicknesses of reinforcing tapes comprising an oriented polymeric composition.

2. Process according to the preceding claim for the production of a pipe reinforced against mechanical stresses, **characterized in that**:
a) firstly, a reinforcing layer formed from at least two thicknesses of tapes based on an oriented polymeric composition is applied to a support based on an unoriented polymeric composition, by winding tapes in such a way that the tapes of one particular thickness make, with those of the adjacent thickness, a similar angle, but of opposite sign, relative to the axis of the pipe;
b) the first protective layer is then applied; and
c) lastly, the external finishing coat is applied.

3. Process according to the preceding claim, **characterized in that** the first thickness of the reinforcing layer is adhesively bonded to the support.

4. Process according to the preceding claim, **characterized in that** the following operations are carried out, in order :
a) the tapes of the reinforcing layer are precoated on one of their sides with a thermally activated polymer adhesive;
b) these reinforcing tapes are applied by winding them around the support;
c) the first protective layer is applied;
d) the adhesive of the reinforcing layer is activated by irradiation of the pipe with infrared radiation while the pipe is being formed; and
e) the external finishing coat is applied.

5. Process according to Claim 9, **characterized in that** the following operations are carried out, in order:
a) the tapes of the reinforcing layer are precoated with a thermally activated polymer adhesive;
b) these reinforcing tapes are applied by the winding, around the support, of each of the successive tape thicknesses while at the same time the precoated adhesive is activated in several separate steps, after each application of a thickness of tapes or of a group of several successive thicknesses of these tapes, by successively irradiating the pipe with infrared radiation while the pipe is being formed;
c) the first protective layer is applied; and
d) the external finishing coat is applied.

6. Process according to any one of the preceding claims, **characterized in that** the first protective layer is bonded to the subjacent polymeric composition.

## Patentansprüche

1. Verfahren zur Herstellung eines Mehrschichtrohrs aus Kunststoffmaterial, welches Rohr vor einer Verschlechterung seiner Eigenschaften bei seinem Gebrauch und seiner Manipulation geschützt ist, **dadurch gekennzeichnet, daß** man:
a) eine erste Schutzschicht auf einen rohrförmigen Kern auf Basis einer Polymerzusammensetzung durch Aufwickeln wenigstens einer Lage von Banden aus einer nicht orientierten Polymerzusammensetzung, die mit der Polymerzusammensetzung des darunterliegenden Kunststoffmaterials kompatibel ist, aufbringt;
b) anschließend eine zweite Schutzschicht durch Aufextrudieren aufträgt, die eine nicht orientierte Polymerzusammensetzung umfaßt, unter Ausbildung einer äußeren Deckschicht,
wobei der Kern :
- entweder eine Polymerzusammensetzung mit zweifach orientierter Struktur umfaßt
- oder eine Polymerzusammensetzung mit nicht orientierter Struktur umfaßt, die an der Oberfläche mit einer Verstärkungsschicht versehen ist, die aus wenigstens zwei Lagen von Verstärkungsbanden besteht, die eine orientierte Polymerzusammensetzung umfassen.

2. Verfahren nach dem vorstehenden Anspruch zur Herstellung eines gegenüber mechanischen Beanspruchungen verstärkten Rohrs, **dadurch gekennzeichnet, daß** man:
a) zunächst auf einen Kern auf der Basis einer nicht orientierten Polymerzusammensetzung eine aus wenigstens zwei Lagen von eine orientierte Polymerzusammensetzung umfassenden Banden bestehende Verstärkungsschicht durch ein derartiges Aufwickeln der Banden aufbringt, daß die Banden einer speziellen Lage mit denjenigen der benachbarten Lage einen in Bezug auf die Rohrrichtung ähnlichen entgegengesetzten Winkel ausbilden;
b) anschließend die erste Schutzschicht aufträgt;
c) zuletzt die Außendeckschicht aufbringt.

3. Verfahren nach dem vorstehenden Anspruch, **dadurch gekennzeichnet, daß** die erste Lage der Verstärkungsschicht auf den Kern aufgeklebt wird.

4. Verfahren nach dem vorstehenden Anspruch, **dadurch gekennzeichnet, daß** man der Reihe nach die folgenden Schritte vornimmt:
a) die Banden der Verstärkungsschicht werden auf einer ihrer Seiten mit einem thermisch aktivierbaren Polymerklebstoff voreingestrichen;
b) diese Verstärkungsbanden werden durch Aufwickeln um den Kern herum aufgebracht;
c) die erste Schutzschicht wird aufgebracht;
d) der Klebstoff der Verstärkungsschicht wird durch Bestrahlen des in Herstellung befindlichen Rohrs mit Infrarotstrahlen aktiviert;
e) die Außendeckschicht wird aufgebracht.

5. Verfahren nach Anspruch 3, **dadurch gekennzeichnet, daß** man der Reihe nach die folgenden Schritte vornimmt:
a) die Banden der Verstärkungsschicht werden mit einem thermisch aktivierbaren Polymerklebstoff voreingestrichen;
b) diese Verstärkungsbanden werden durch Aufwickeln jeder aufeinanderfolgenden Lage der Banden rund um den Kern aufgebracht, während gleichzeitig der voreingestrichene Klebstoff in mehreren unterschiedlichen Stufen aktiviert wird, nach jedem Aufbringen einer Lage der Banden oder einer Gruppe von mehreren aufeinanderfolgenden Lagen dieser Banden, durch aufeinanderfolgende Bestrahlungen des in Herstellung befindlichen Rohrs mit einer Infrarotbestrahlung;
c) die erste Schutzschicht wird aufgebracht;
d) die Außendeckschicht wird aufgebracht.

6. Verfahren nach einem der vorstehenden Ansprüche, **dadurch gekennzeichnet, daß** die erste Schutzschicht auf die darunterliegende Polymerzusammensetzung aufgeklebt wird.
